# EUROPÄISCHE PATENTSCHRIFT

(11) **EP 2 014 535 B1**
(45) Veröffentlichungstag und Bekanntmachung des Hinweises auf die Patenterteilung: **19.09.2012**
(21) Anmeldenummer: 08010844.2
(22) Anmeldetag: 13.06.2008
(51) Int. Cl.: B62B 3/00, B62B 3/16

(54) **Nestbarer Rollbehälter**
Nestable roller container
Conteneur sur rouleaux empilable

(30) Priorität: 13.07.2007 DE 102007033147; 13.07.2007 DE 202007009933 U
(43) Veröffentlichungstag der Anmeldung: 14.01.2009
(73) Patentinhaber: GEBHARDT Transport- und Lagersysteme GmbH, 93413 Cham (DE)
(72) Erfinder: Artinger, Manfred, 94530 Auerbach (DE)
(74) Vertreter: Mischung, Ralf

(56) Entgegenhaltungen:
- EP-A- 0 719 691
- EP-A- 1 118 524
- EP-A- 1 777 137
- WO-A-2007/001166

## Beschreibung

Die Erfindung bezieht sich auf einen stapelbaren Rollbehälter, insbesondere für den Transport von Lebensmitteln, Kosmetikartikeln oder Gebrauchsgegenständen in Großgebinden, mit einem vorzugsweise rechteckigen Boden, an welchem unterseitig Transportrollen und zwei einander gegenüberstehende Aufsteckwände angeordnet sind.

Auch dreiseitige Lösungen sind Gegenstand der Erfindung, wobei eine dritte Wand als Rückwand vorgesehen sein kann. Auch allseitig geschlossene Behälter sind grundsätzlich denkbar (s.u.).

Für den Transport von Lebensmitteln, Kosmetikartikeln oder anderen Gebrauchsgegenständen werden von den Handelsketten überwiegend sogenannte Rollbehälter verwendet. Hierbei wird unterschieden zwischen sogenannten nicht "nestbaren" Rollbehältem, d.h. Rollbehälter, welche nicht ineinander gesteckt werden können und stapelbaren Rollbehältern. Nicht nestbare Rollbehälter erfordern erhebliche Lagerraumkosten und sind unpraktisch in der Handhabung. Auch der Zerlegeaufwand (bspw. für einen Rücktransport) ist erheblich, und die Beschädigungsquote an Rollen, Rahmen ist besonders bei kopfüber transportierten Behältern erheblich.

Nestbare Rollbehälter haben einen speziell ausgebildeten Bodenrahmen, beispielsweise in Trapezform der Bodenkonstruktion oder die Gestaltung eines "Z" bzw. eines "V", wobei diese bekannten Konstruktionen ein geradliniges oder seitliches Nesten ermöglichen.

Die unterschiedlichen Ausführungen der nestbaren Rollbehälter stellen teilweise gewichtsmäßig schwere Konstruktionen dar, besitzen eine laute Geräuschemission und sind nicht oder nur eingeschränkt geeignet für die moderne Fördertechnik.

Aus der WO2007/001166 A1 ist ein faltbarer Container bekannt, der aus einer ersten, großvolumigen Anordnung auf ein geringeres Volumen zusammenfaltbar ist, um im leeren Zustand weniger Raum zu beanspruchen. Zu diesem Zweck sind einige Seitenteileelemente des Containers über Gelenke schwenkbar miteinander verbunden, so dass einige Seitenteilabschnitte in das Behälterinnere hinein faltbar sind, so dass bei vorausgegangenem Hochklappen des Behälterbodens einige Seitenwände zwischen die anderen Seitewände gefaltet werden können, so dass der Behälter weniger Platz beansprucht und mit gleichartig zusammengefalteten Behältern eng beabstandet zueinander angeordnet werden kann.

Die EP 1 777 137 A1 beschreibt einen nestbaren Rollbehälter gemäß dem Oberbegriff von Anspruch 1 Zwei an einem Basisrahmen angeordnete, schwenkbare Arme sind dabei in unterschiedlichen Schwenkpositionen relativ zum Basisrahmen mit diesem arretierbar, wobei der Basisrahmen aus der Vertikalen in die Horizontale herunter faltbar ist, um platzsparend angeordnet werden zu können.

Die EP 1 118 524 A2 beschreibt eine Transportvorrichtung mit einer Bodenplatte, wobei die Bodenplatte mit mehreren Ausnehmungen versehen ist, um gleichartige weitere Bodenplatten mit jeweils darunter angeordneten Transportrollen in versetzter oder fluchtender Anordnung aufeinander aufstapeln zu können.

Aufgabe der vorliegenden Erfindung ist es demgegenüber, einen nestbaren Rollbehälter der eingangs genannten Art zu schaffen, welcher bei einfachem konstruktivem Aufbau kein Zerlegen erforderlich macht, eine platzsparende Aufbewahrung nicht benötigter Rollbehälter in der Filiale bzw. im Verteilerlager und im LKW ermöglicht und keine aufwändigen Werkzeugkosten zur Umrüstung erforderlich macht.

Diese Aufgabe wird erfindungsgemäß durch einen nestbaren Rollbehälter gemäß Anspruch 1 gelöst.

Durch diese besondere konstruktive Gestaltung wird ein nestbarer Rollbehälter geschaffen, welcher in der Lage ist, alle in der Praxis auftretenden Erfordernisse zu erfüllen und gleichzeitig auf einfache Weise hergestellt werden kann.

Dabei weist jede Aufsteckwand in der Grundebene eine obere waagrechte Basisstrebe und daran anschließend eine vordere senkrechte Endstrebe auf. Die eingezogene hintere senkrechte Endstrebe und die waagrechte obere Basisstrebe einerseits und die untere waagrechte Basisstrebe sowie die vordere senkrechte Endstrebe andererseits sind jeweils über eingezogene Bereiche miteinander verbunden. Durch diese eingezogenen Bereiche wird auf einfache Weise ein Ineinanderstecken der Rollbehälter ermöglicht.

Bei Behältern mit senkrechten und waagrechten Gitterstäben der Aufsteckwände können die waagrechten Gitterstäbe der gegenüberliegenden Aufsteckwände jeweils im gegenüber der Grundebene eingezogenen Bereich mit der vorderen und der hinteren Endstrebe verbunden sein. Hierbei können die senkrechten Gitterstäbe im Bereich der Grundebene liegen und mit der jeweiligen oberen waagrechten Basisstrebe und über schräge Anschlüsse mit der jeweiligen unteren waagrechten Basisstrebe verbunden sein.

Jeder Boden kann in weiterer Ausgestaltung der Erfindung im Bereich der darüber liegenden Transportrolle des darüber gestapelten Rollbehälters mindestens eine Aussparung zur Arretierung aufweisen, wodurch eine sichere Stapelbarkeit der übereinander angeordneten Rollbehälter erreicht wird. Darüber hinaus besteht die Möglichkeit, dass in weiterer Ausgestaltung der Erfindung jeder Boden oberseitig mindestens eine Rille zur Führung mindestens einer der Transportrollen aufweist. Dabei ist vorzugsweise auf eine möglichst ruckfreie Führung der Rolle zu achten, so dass ein Behälter ohne Mühe leicht in den Bodenrahmen (bzw. die Laufrille) eines darunter befindlichen Behälters eingesetzt bzw. in diesen eingeschoben werden kann.

In weiterer Ausgestaltung der Erfindung kann quer zu den beiden einander gegenüberstehenden Aufsteckwänden zwischen diesen eine Abschlusssteckwand angeordnet sein, wobei die Abschlusssteckwand und die beiden Aufsteckwände miteinander und mit dem Boden befestigt sein können. Alle Seitenwände können hierbei über an sich bekannte Steckverbindungen in Aussparungen am Boden befestigt sein. Erfindungsgemäß lassen sich die Seitenwände im eingesetzten Zustand innerhalb gewollter Toleranzen seitlich auslenken, um das Nesten zu erleichtern. Anders als bei den starren Behältern aus dem Stand der Technik gestattet diese Beweglichkeit das leichte Auseinanderdrücken der Seitenwände, um die Behälter leichter ineinander schieben zu können.

Sofern eine dreiseitige Lösung mit Rückwand vorgesehen ist, kann diese Rückwand mit den Seitenwänden vorzugsweise über geeignete Scharniere verbunden sein. Die Scharniere erlauben dabei ebenfalls die vorgenannte Bewegung der Seitenwände innerhalb der gewünschten Toleranzen für ein erleichtertes Nesten. Vorzugsweise gestatten die Scharniere dabei ein Spiel von 30mm - 40mm, etwa mittels eine Langlochkonstruktion oder über andere Verschiebeelemente des Scharniers.

Schließlich kann der erfindungsgemäße Behälter auch mit einer (vorzugsweise aushängbaren bzw. metallischen) Tür versehen sein, um ihn von vom zu verschließen. Alternativ kann auch eine andere geeignete Frontabdeckung (Plane etc.) zum Verschluss des Behälters Verwendung finden.

Vorzugsweise sind Zwischenböden vorgesehen, die zwischen den Seitenwänden einlegbar oder einhängbar sind und zur Lastaufteilung bzw. Stabilisierung des Behälters dienen. Sofern eine Rückwand als dritte Seitenwand vorgesehen ist, können die Zwischenböden auch zur stabilisierenden Verbindung der Wände untereinander beitragen, wenn sie mit jeder Wand in geeigneter Form mechanisch zusammenwirken (dreiseitig eingehängt; zweiseitig eingehängt mit Anschlag an dritter Wand etc.).

Die Erfindung wird nachfolgend anhand von in der Zeichnung dargestellten Ausführungsbeispielen näher beschrieben. In der Zeichnung zeigen:
- Fig. 1: eine perspektivische Ansicht eines einzelnen stapelbaren Rollbehäl- ters,
- Fig. 2, 3 und 4: drei verschiedene Ansichten mehrerer gestapelter Rollbehälter nach der Erfindung,
- Fig. 5: eine Seitenansicht der rechten Aufsteckwand des erfindungsgemäßen Rollbehälters,
- Fig. 6: eine perspektivische Ansicht der rechten Aufsteckwand,
- Fig. 7: eine Seitenansicht der rechten Aufsteckwand nach Fig. 5 und 6,
- Fig. 8: eine perspektivische Ansicht eines stapelbaren Rollbehälters mit drei Aufsteckwänden,
- Fig.9, 10 und 11: drei Ansichten von gestapelten Rollbehältern der Bauform nach Fig. 8.

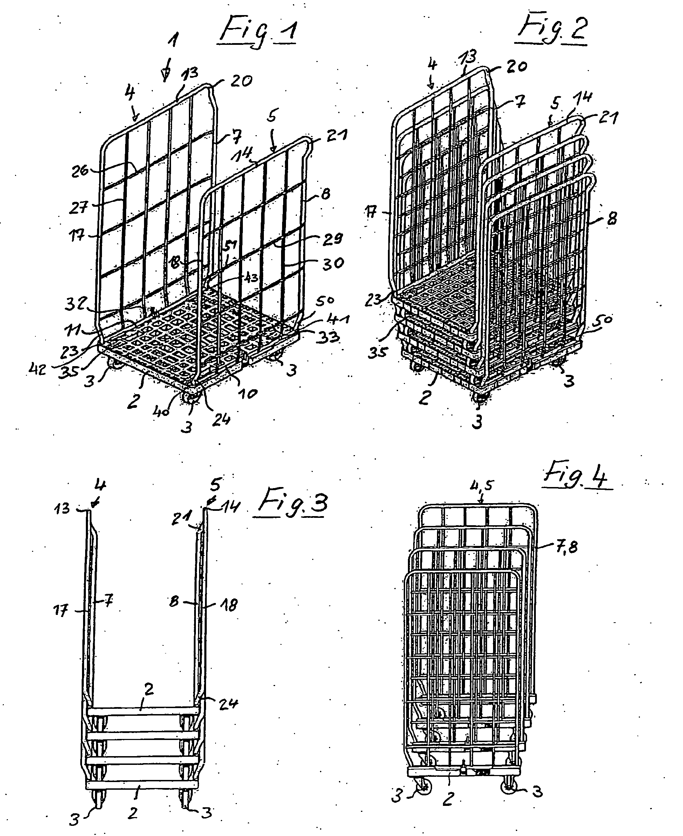

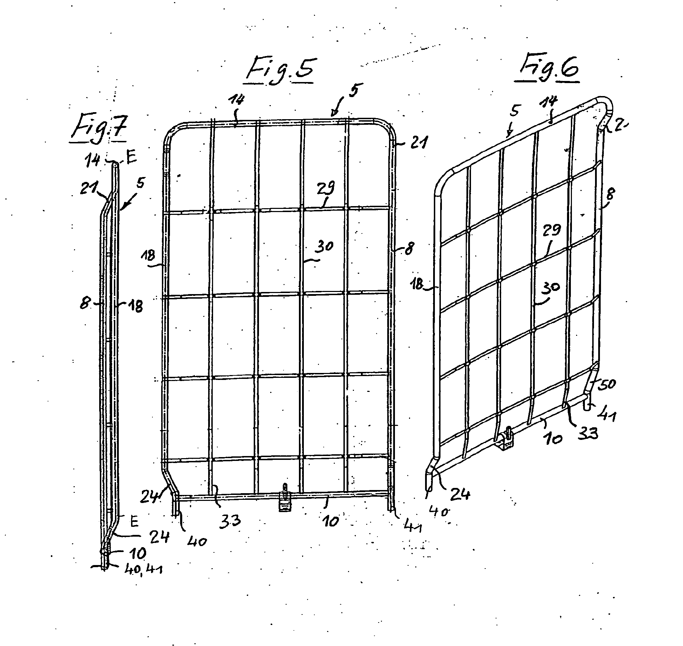

Wie in Fig. 1 sowie 5 bis 7 dargestellt, betrifft die Erfindung einen stapelbaren Rollbehälter 1, welcher insbesondere für den Transport von Lebensmitteln, Kosmetikartikeln oder anderen Gebrauchsgegenständen in Großgebinden eingesetzt werden kann. Dieser Rollbehälter 1 weist einen vorzugsweise rechteckigen Boden 2 auf, an welchen unterseitig nach Fig. 1 Transportrollen 3 und zwei einander gegenüberstehende Aufsteckwände 4, 5 angeordnet sind. Diese Aufsteckwände 4, 5 lassen sich über Zapfen 40, 41 bzw. 42, 43 nach Fig. 1 bzw. Fig. 5 in entsprechende Aussparungen des Bodens 2 einstecken.

Erfindungsgemäß weist jede der einander gegenüberstehenden Aufsteckwände 4, 5 eine gegenüber einer vertikalen Grundebene E-E nach Fig. 7 eingezogene hintere senkrechte Endstrebe 7 bzw. 8 und eine daran über eine Schräge 50 bzw. 51 anschließende untere waagrechte Basisstrebe 10, 11 auf.

Darüber hinaus besitzt jede Aufsteckwand 4, 5 in der Grundebene E-E nach Fig. 1 und 6 eine obere waagrechte Basisstrebe 13, 14 und daran anschließend eine vordere senkrechte Endstrebe 17, 18.

Aus Fig. 1 geht hervor, dass die eingezogene hintere senkrechte Endstrebe 7, 8 und die waagrechte obere Basisstrebe 13, 14 jeder Aufsteckwand über einen eingezogenen Bereich 20, 21 miteinander verbunden sind. Ebenso stehen die waagrechten oberen Basisstreben 13, 14 und die vorderen senkrechten Endstreben 17, 18 jeweils über eingezogene Bereiche 23 und 24 nach Fig. 1 bzw. nach Fig. 5 und 6 miteinander in Verbindung.

Die aussteckbaren Seitenwände 4, 5 können mit waagrechten Gitterstreben 26 und 29 und mit senkrechten Gitterstreben 29 und 30 versehen sein. Erfindungsgemäß sind die waagrechten Gitterstäbe 26 und 29 der gegenüberliegenden Aufsteckwände 4, 5 jeweils im gegenüber der Grundebene E-E eingezogenen Bereich mit der vorderen und hinteren Endstrebe 7, 17 bzw. 8, 18 verbunden. Hierbei liegen die senkrechten Gitterstäbe 27 und 30 im Bereich der Grundebene E-E und sind mit der jeweils oberen waagrechten Basisstrebe 13, 14 und über schräge Anschlüsse 32 und 33 (siehe Fig. 6) mit der jeweiligen unteren waagrechten Basisstrebe 10, 11 verbunden.

Um die in Fig. 2, 3 und 4 gestapelt dargestellten erfindungsgemäßen Rollbehälter in ihrer eingeschobenen Position sicher zu halten, besteht erfindungsgemäß die Möglichkeit, dass jeder Boden 2 im Bereich der darüber liegenden Transportrolle 3 des darüber gestapelten Rollbehälters mindestens eine Aussparung 35 nach Fig. 1 zur Arretierung aufweist. Darüber hinaus kann jeder Boden 2 oberseitig mindestens eine nicht näher dargestellte Rille zur Führung mindestens einer der Transportrollen 3 des darüber gestapelten Rollbehälters 1 aufweisen.

Der Boden 2 besteht vorzugsweise aus Kunststoff und weist Aussparungen auf, so dass die aufsteckbaren Seitenwände 4 und 5 über nicht näher dargestellte Steckverbindungen am Boden befestigt werden können.

Bei der Ausführungsform nach Fig. 2 bis 4 weist der stapelbare Rollbehälter zwei einander gegenüberstehende Aufsteckwände 4, 5 auf, welche eine besondere konstruktive Gestaltung zur Nestbarkeit besitzen.

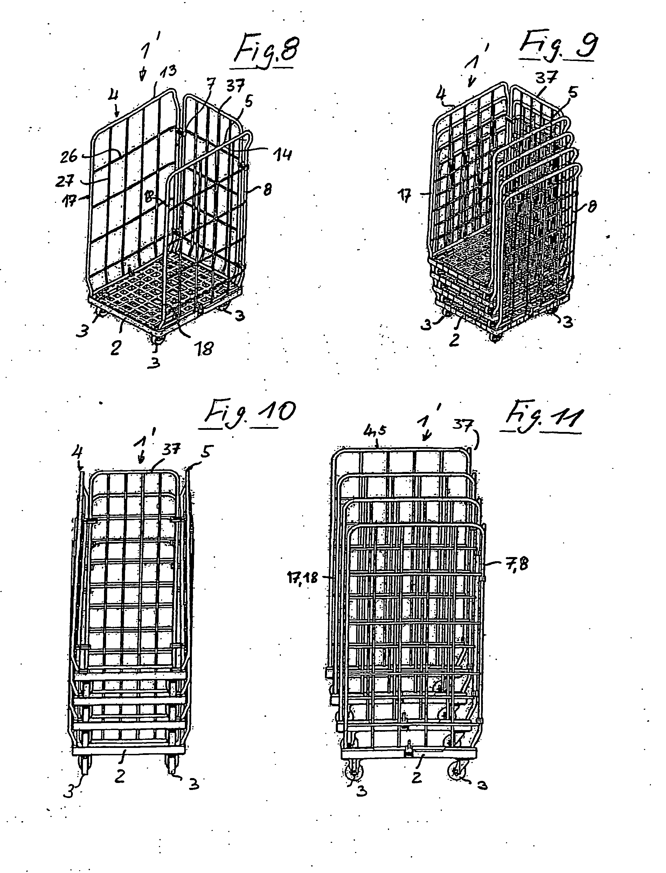

Erfindungsgemäß besteht nach Fig. 8 bis 11 auch die Möglichkeit, dass der Rollbehälter 1' zwischen den beiden einander gegenüberstehenden Aufsteckwänden 4 und 5 eine Abschlusssteckwand 37 aufweist, welche über an sich bekannte Verbindungen sowohl mit den jeweiligen Aufsteckwänden 4 und 5 als auch mit dem Boden 2 verbunden sind.

Auch bei dieser erfindungsgemäßen Konstruktion weisen die Aufsteckwände 4 und 5 die erfindungsgemäße Konfiguration auf, wie sie insbesondere in den Fig. 1 sowie 5 bis 7 im Einzelnen für eine rechte Aufsteckwand dargestellt sind. Die Abschlusssteckwand 38 ist hiervon nicht berührt, so dass die Möglichkeit besteht, nach Fig. 9 bis 11 auch diese Bauform des aufsteckbaren Rollbehälters in stapelbarer Form in platzsparender Weise zu transportieren.

## Patentansprüche

1. Nestbarer Rollbehälter (1) für den Transport von Lebensmitteln, Kosmetikartikeln. oder Gebrauchsgegenständen in Großgebinden,
mit einem vorzugsweise rechteckigen Boden (2), an welchem unterseitig Transportrollen (3) und zwei einander gegenüberstehende Aufsteckwände (4, 5) angeordnet sind,
**dadurch gekennzeichnet,**
**dass** jede der einander gegenüberstehenden Aufsteckwände (4, 5) in einer vertikalen Grundebene (E-E) eine obere waagerechte Basisstrebe (13, 14) und daran anschließend eine vordere senkrechte Endstrebe (17, 18), sowie eine gegenüber der vertikalen Grundebene (E-E) eingezogene hintere senkrechte Endstrebe (7, 8) und eine daran anschließende untere waagrechte Basisstrebe (10, 11) aufweist.

2. Behälter nach Anspruch 1, **dadurch gekennzeichnet, dass** die eingezogene hintere senkrechte Endstrebe (7, 8) und die waagerechte obere Basisstrebe (13, 14) einerseits und die untere waagrechte Basisstrebe (10, 11) sowie die vordere senkrechte Endstrebe (17, 18) andererseits jeweils über eingezogene Bereiche (20, 21; 23, 24) miteinander verbunden sind.

3. Behälter nach einem oder mehreren der vorhergehenden Ansprüche, mit senkrechten und waagrechten Gitterstäben (26, 27; 29, 30), **dadurch gekennzeichnet, dass** die waagrechten Gitterstäbe (26, 29) der gegenüber liegenden Aufsteckwände (4, 5) jeweils im gegenüber der Grundebene (E-E) eingezogenen Bereich mit der vorderen und der hinteren Endstrebe (7, 17; 8, 18) verbunden sind.

4. Behälter nach Anspruch 3 und einem oder mehreren der vorhergehenden Ansprüche, **dadurch gekennzeichnet, dass** die senkrechten Gitterstäbe (27, 30) im Bereich der Grundebene (E-E) liegen und jeweils mit der oberen waagrechten Basisstrebe (13, 14) und über schräge Anschlüsse (32, 33) mit der jeweiligen unteren waagrechten Basisstrebe (10, 11) verbunden sind.

5. Behälter nach einem oder mehreren der vorhergehenden Ansprüche, **dadurch gekennzeichnet, dass** jeder Boden (2) im Bereich der darüber liegenden Transportrolle (3) des darüber gestapelten Behälters mindestens eine Aussparung (35) zur Arretierung aufweist.

6. Behälter nach einem oder mehreren der vorhergehenden Ansprüche, **dadurch gekennzeichnet, dass** jeder Boden (2) oberseitig mindestens eine Rille zur vorzugsweise ruckfreien Führung mindestens einer der Transportrollen (3) aufweist.

7. Behälter nach einem oder mehreren der vorhergehenden Ansprüche, **dadurch gekennzeichnet, dass** der Boden (2) aus Kunststoff besteht.

8. Behälter nach einem oder mehreren der vorhergehenden Ansprüche, **dadurch gekennzeichnet, dass** quer zu den beiden einander gegenüberstehenden Aufsteckwänden (4, 5) zwischen diesen eine Abschlusssteckwand (37) angeordnet ist.

9. Behälter nach Anspruch 8, **dadurch gekennzeichnet, dass** die Abschlusssteckwand (37) an den beiden benachbarten Aufsteckwänden (4, 5) und am Boden (2) befestigt ist.

10. Behälter nach einem oder mehreren der vorhergehenden Ansprüche, **dadurch gekennzeichnet, dass** alle Aufsteckwände (4, 5; 37) über Steckverbindungen in Aussparungen am Boden (2) befestigt sind.

11. Behälter nach einem oder mehreren der vorhergehenden Ansprüche, **dadurch gekennzeichnet, dass** gegenüberliegende Aufsteckwände (4, 5) im befestigten Zustand innerhalb gewollter Toleranzen seitlich auslenkbar sind, um das Nesten zu erleichtern.

12. Behälter nach einem oder mehreren der vorhergehenden Ansprüche, **dadurch gekennzeichnet, dass** eine zwischen zwei gegenüberliegenden Aufsteckwänden (4, 5) angeordnete Rückwand (38) mit den Seitenwänden (4, 5) über Befestigungsmittel, insbesondere Scharniere, verbunden ist, wobei die Befestigungsmittel eine seitliche Auslenkung der Seitenwände relativ zur Rückwand (38) innerhalb vorgebbarer Toleranzen ermöglichen.

## Claims

1. A nestable roller container (1) for the transportation of foodstuffs, cosmetic articles or commodity goods in large bundles,
having a preferably rectangular base (2), arranged on the underside of which there are transport rollers (3) and two attachment walls (4, 5) standing opposite each other,
**characterised in that**
each of the attachment walls (4, 5) standing opposite each other in a vertical base plane (E-E) has an upper horizontal base strut (13, 14) and following on therefrom a front vertical end strut (17, 18) and also a rear vertical end strut (7, 8) drawn in in relation to the vertical base plane (E-E), and a lower horizontal base strut (10, 11) following on therefrom.

2. A container according to claim 1, **characterised in that** the drawn-in rear vertical end strut (7, 8) and the horizontal upper base strut (13, 14), on the one hand, and the lower horizontal base strut (10, 11) and also the front vertical end strut (17, 18), on the other hand, are each connected together by way of drawn-in regions (20, 21; 23, 24).

3. A container according to one or more of the preceding claims, having vertical and horizontal lattice bars (26, 27; 29, 30), **characterised in that** the horizontal lattice bars (26, 29) of the opposing attachment walls (4, 5) in each case in the region that is drawn in in relation to the base plane (E-E) are connected to the front and the rear end strut (7, 17; 8, 18).

4. A container according to claim 3 and one or more of the preceding claims, **characterised in that** the vertical lattice bars (27, 30) lie in the region of the base plane (E-E) and in each case are connected to the upper horizontal base strut (13, 14) and, by way of inclined connections (32, 33), to the respective lower horizontal base strut (10, 11).

5. A container according to one or more of the preceding claims, **characterised in that** each base (2) has, in the region of the transport roller (3) that lies above and pertains to the container stacked above, at least one recess (35) for arresting purposes.

6. A container according to one or more of the preceding claims, **characterised in that** each base (2) has on the upper side at least one groove for guiding at least one of the transport rollers (3) preferably in a jerk-free manner.

7. A container according to one or more of the preceding claims, **characterised in that** the base (2) consists of plastics material.

8. A container according to one or more of the preceding claims, **characterised in that** a closing insert wall (37) is arranged transversely to and between the two opposing attachment walls (4, 5).

9. A container according to claim 8, **characterised in that** the closing insert wall (37) is secured to the two adjacent attachment walls (4, 5) and to the base (2).

10. A container according to one or more of the preceding claims, **characterised in that** all the attachment walls (4, 5; 37) are secured to the base (2) by way of plug-in connections in recesses.

11. A container according to one or more of the preceding claims, **characterised in that** opposing attachment walls (4, 5) in the secured state can be laterally deflected within desired tolerances in order to facilitate the nesting.

12. A container according to one or more of the preceding claims, **characterised in that** a rear wall (38) that is arranged between two opposing attachment walls (4, 5) is connected to the side walls (4, 5) by way of securing means, in particular hinges, wherein the securing means render possible lateral deflection of the side walls relative to the rear wall (38) within predeterminable tolerances.

## Revendications

1. Conteneur à roulettes encastrable (1) pour le transport de produits alimentaires, d'articles cosmétiques ou d'objets usuels, dans de grands emballages,
avec un fond de préférence rectangulaire (2), sur lequel sont agencées des roulettes de transport (3) sur le côté inférieur et deux parois encadrantes (4, 5) opposées l'une à l'autre ;
**caractérisé en ce que**
chacune des parois encadrantes (4, 5) opposées l'une à l'autre présente une barre de base horizontale supérieure (13, 14) et une barre d'extrémité verticale avant (17, 18) la rejoignant dans un plan de base vertical (E-E), ainsi qu'une barre d'extrémité verticale arrière rétractée (7, 8) par rapport à un plan de base vertical (E-E), et une barre de base horizontale inférieure (10, 11) la rejoignant.

2. Conteneur selon la revendication 1, **caractérisé en ce que** la barre d'extrémité verticale arrière rétractée (7, 8) et la barre de base supérieure horizontale (13, 14) d'une part, et la barre de base horizontale inférieure (10, 11) ainsi que la barre d'extrémité verticale avant (17, 18) d'autre part, sont reliées les unes aux autres via des régions rétractées (20, 21 ; 23, 24).

3. Conteneur selon l'une ou plusieurs des revendications précédentes, avec des baguettes en treillis verticales et horizontales (26, 27 ; 29, 30), **caractérisé en ce que** les baguettes en treillis horizontales (26, 29) des parois encadrantes opposées (4, 5) sont respectivement reliées, dans la région rétractée par rapport au plan de base (E-E), aux barres d'extrémité avant et arrière (7, 17 ; 8, 18).

4. Conteneur selon la revendication 3, et l'une ou plusieurs des revendications précédentes, **caractérisé en ce que** les baguettes en treillis verticales (27, 30) se situent dans la région du plan de base (E-E) et sont respectivement reliées à la barre de base horizontale supérieure (13, 14) et via des raccords inclinés (32, 33) à la barre de base horizontale inférieure respective (10, 11).

5. Conteneur selon l'une ou plusieurs des revendications précédentes, **caractérisé en ce que** chaque fond (2) présente au moins un évidement (35) pour le blocage dans la région de la roulette de transport (3) se trouvant au-dessus du conteneur empilé par dessus.

6. Conteneur selon l'une ou plusieurs des revendications précédentes, **caractérisé en ce que** chaque fond (2) du côté supérieur présente au moins une rainure pour le guidage de préférence sans à-coups d'au moins une des roulettes de transport (3).

7. Conteneur selon l'une ou plusieurs des revendications précédentes, **caractérisé en ce que** le fond (2) est constitué de matière plastique.

8. Conteneur selon l'une ou plusieurs des revendications précédentes, **caractérisé en ce que** de manière transversale aux deux parois encadrantes (4, 5) opposées l'une à l'autre, une paroi d'insertion de fermeture (37) est agencée entre ces dernières.

9. Conteneur selon la revendication 8, **caractérisé en ce que** la paroi d'insertion de fermeture (37) est fixée aux deux parois encadrantes avoisinantes (4, 5) et au fond (2).

10. Conteneur selon l'une ou plusieurs des revendications précédentes, **caractérisé en ce que** toutes les parois encadrantes (4, 5 ; 37) sont fixées au fond (2) par des raccords d'insertion dans les évidements.

11. Conteneur selon l'une ou plusieurs des revendications précédentes, **caractérisé en ce que** des parois encadrantes opposées (4, 5), quand elles sont fixées, peuvent être déviées latéralement dans un domaine de tolérance voulu afin de faciliter l'encastrement.

12. Conteneur selon l'une ou plusieurs des revendications précédentes, **caractérisé en ce qu'**une paroi arrière (38), agencée entre deux parois encadrantes opposées (4, 5) est reliée aux parois latérales (4, 5) via des moyens de fixation, en particulier des charnières, lesquels moyens de fixation permettent une déviation latérale des parois latérales par rapport à la paroi arrière (38) à l'intérieur d'un domaine de tolérance pré-définissable.
